# EUROPÄISCHE PATENTSCHRIFT

(11) **EP 1 581 780 B1**
(45) Veröffentlichungstag und Bekanntmachung des Hinweises auf die Patenterteilung: **18.07.2007**
(21) Anmeldenummer: 03767603.8
(22) Anmeldetag: 21.11.2003
(51) Int. Cl.: F28D 20/00

(54) **VERTEILEREINRICHTUNG FÜR EINE WARMWASSER-SCHICHTSPEICHERVORRICHTUNG UND ENTSPRECHENDE WARMWASSER-SCHICHTSPEICHERVORRICHTUNG**
DISTRIBUTION UNIT FOR A STORAGE TANK WITH LAYERED STORAGE OF HOT WATER AND CORRESPONDING STORAGE TANK WITH LAYERED STORAGE OF HOT WATER
DISPOSITIF DE DISTRIBUTION POUR UNE INSTALLATION DE RESERVOIR D'EAU CHAUDE A NIVEAUX ET INSTALLATION DE RESERVOIR D'EAU CHAUDE A NIVEAUX CORRESPONDANTE

(30) Priorität: 06.12.2002 DE 10257209
(43) Veröffentlichungstag der Anmeldung: 05.10.2005
(73) Patentinhaber: SANDLER SYSTEMTECHNIK, 87600 Kaufbeuren (DE)
(72) Erfinder: SANDLER, Martin, 87600 Kaufbeuren (DE)
(74) Vertreter: Barth, Stephan Manuel
(86) Internationale Anmeldenummer: PCT/EP2003/013090
(87) Internationale Veröffentlichungsnummer: WO 2004/053413

(56) Entgegenhaltungen:
- DE-A- 3 835 096
- DE-A- 19 731 351
- DE-U- 29 918 550

## Beschreibung

Die vorliegende Erfindung betrifft eine Verteilereinrichtung für eine Warmwasser-Schichtspeichervorrichtung und eine entsprechende Warmwasser-Schichtspeichervorrichtung mit einem Speicherbehälter, der einen Zuführungsstutzen zum Zuführen von Warmwasser aufweist, und mit der mit dem Zuführungsstutzen verbundenen, im oberen Höhenbereich des Speicherbehälters angeordneten Verteilereinrichtung zum höhenmässigen Verteilen von zugeführtem Warmwasser im Innern des Speicherbehälters.

Die DE 197 31 351 A1beschreibt einen Speicherwassererwärmer mit einem mehrstöckigen Steig- bzw. Sinkrohr, das in unterschiedlichen Vertikalniveaus mit Öffnungen in den umgebenden Bereich des Kessels geöffnet ist.

Ohne Beschränkung ihrer allgemeinen Verwendbarkeit werden die vorliegende Erfindung sowie die ihr zugrundeliegende Problematik in bezug Warmwasser-Schichtspeichervorrichtungen für Brauchwasserentnahmeanlagen, Heizungsanlagen oder Wärmerückgewinnungsanlagen, insbesondere in Verbindung mit Sonnenkollektoren als Wärmequelle mit einem aufrechtstehenden Speicherbehälter erläutert, der ein Höhen-/Durchmesserverhältnis grösser als 1 aufweist. Aus der DE 38 35 096A ist solch eine Warmwasser-Schichtspeichervorrichtung bekannt.

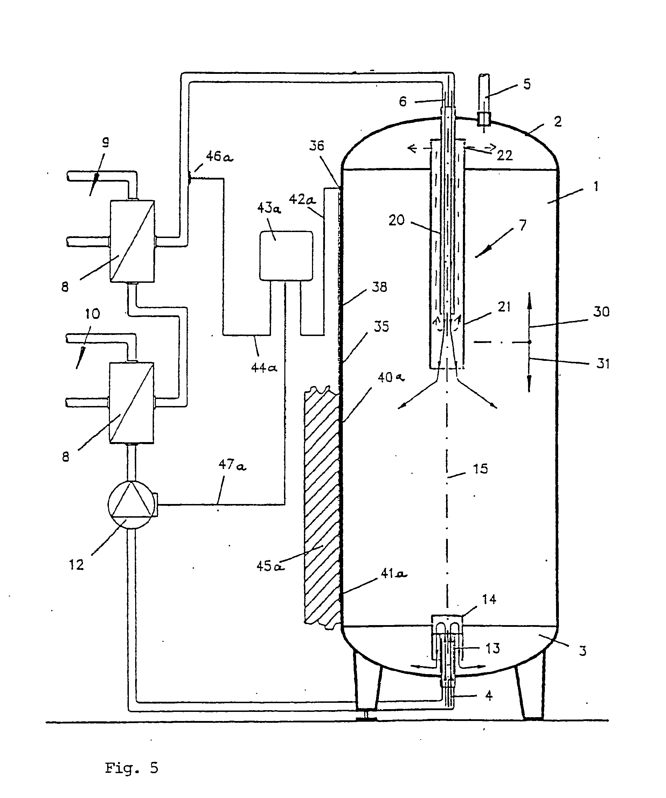

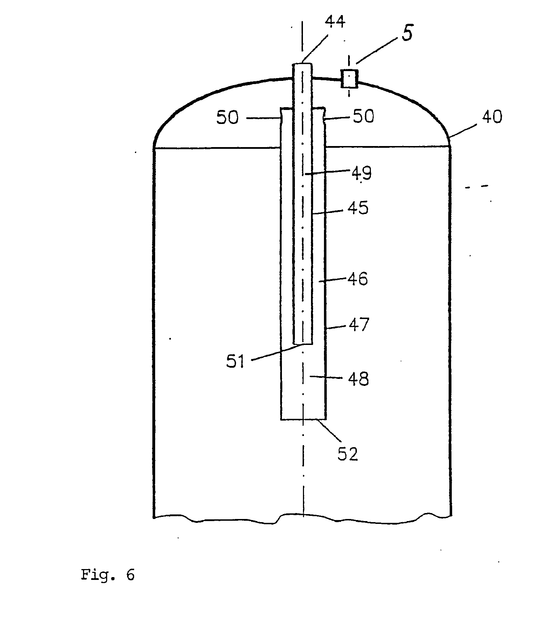

Fig. 5 zeigt eine schematische Darstellung einer aus der DE 38 35 096A bekannten Warmwasser-Schichtspeichervorrichtung mit einer Verteilereinrichtung zum höhenmässigen Verteilen von zugeführtem Warmwasser im Innern des Speicherbehälters, und Fig. 6 zeigt eine vergrösserte schematische Schnittdarstellung der Verteilereinrichtung gemäss Fig. 5.

Bezugszeichen 1 in Fig. 5 bzw. 40 in Fig. 6 bezeichnet einen Speicherbehälter 1, der aufrechtstehend auf dem Boden angeordnet ist. Seine Höhe ist wesentlich grösser als sein Durchmesser.

Im Bereich des Speicherbodens 3 ist ein Wasserstutzen 4 angeordnet, durch den Rücklaufwasser dem Speicherbehälter zugeführt oder aus diesem entnommen werden kann. Im Bereich der Decke 2 des Speicherbehälters 1 ist ein Zuführungsstutzen 6 angeordnet durch den Warmwasser dem Speichervolumen zugespeist wird. Mit dem Zuführungsstutzen 6 ist eine auf die Achse 15 des Behälters ausgerichtete Verteilereinrichtung 7 verbunden. In der Decke 2 ist ein Entnahmestutzen 5 angeordnet, über den Warmwasser aus dem oberen Bereich des Speicherbehälters 1 entnommen und dem Verbraucher zugeführt werden kann.

Durch die Verteilereinrichtung 7 wird das Speichervolumen der Höhe nach unterteilt. Dies ist durch die strichpunktierte Linie mit den beiden Pfeilen 30 und 31 angedeutet Die Höhenlage der strichpunktierten Linie ist nicht kritisch und variiert In jedem Fall ist der durch den Pfeil 30 angedeutete obere Bereich des Speichervolumens derjenige Bereich, der bei Inbetriebnahme der Anlage als erster mit dem über den Zuführungsstutzen 6 zugerührten heissen Wasser gefüllt wird und der somit schon kurze Zeit nach Betriebsaufnahme Warmwasser durch den Entnahmestutzen 5 zur Verfügung stellen kann. Der untere Bereich, der durch den Pfeil 31 angedeutet ist, dient als Speicherreserve und ist normalerweise mit weniger warmem Wasser gefüllt.

Die Verteilereinrichtung 7 besteht aus einem langgestreckten unten offenen inneren Leitrohr 20 und einem dieses mit radialem Spiel umgebenden langgestreckten und unten offenen äusseren Leitrohr 21, welches das innere Leitrohr nach unten um ein vorbestimmtes Mass überragt. Im oberen Bereich des oben im übrigen geschlossenen äusseren Leitrohres sind Durchtrittsöffnungen 22 in Umfangsrichtung verteilt angeordnet.

Die Verteilereinrichtung 7 bildet somit eine langgestreckte Eintrittszone 49 (vgl. Fig. 6), eine an diese anschliessende erweiterte Verweilzone 48 und eine langgestreckte Aufströmzone 46, die über die oberen Durchtrittsöffnungen 22 (Fig. 5) oder 50 (Fig. 6) mit dem oberen Speichervolumenbereich in Verbindung steht. Bezogen auf die maximale volumetrische Leistung einer das Wasser dem Zuführungsstutzen 6 oder 44 zuführenden Speiseeinrichtung sind die Strömungsquerschnitte der verschiedenen Zonen und Bohrungen so gewählt, dass in allen Zonen im wesentlichen nur laminare Strömungen ohne Turbulenzen vorliegen und die Strömungsgeschwindigkeit so gering ist, dass durch die sich in der Verteilereinrichtung 7 entwickelnden Strömungen kein Wasser aus dem eigentlichen Speichervolumen mitgerissen wird, und zwar unabhängig von der Strömungsrichtung in der Verteilereinrichtung 7.

Dem unteren Wasserstutzen 4 ist eine Strömungsbremseinrichtung 13, 14 zugeordnet, welche die durch den Wasserstutzen 4 eintretende Wasserströmung abbremst, beruhigt und um 180 Grad in Richtung auf den Boden 3 des Behälters umlenkt. so dass das eintretende Wasser in laminarer Strömung sich fächerartig über den Boden 3 des Behälters ausbreitet und ohne Turbulenzen in das Speichervolumen eintritt.

Über die Höhe des Speicherbehälters 1 sind Temperaturfühler verteilt. Diese sind elektronische Anlagefühler, diein einem Messband zusammen mit den Messleitungen integriert sind. Das Messband 35 ist z.B. entlang einer Mantellinie auf der Aussenfläche der Behälterwandung angeordnet, so dass in verschiedenen Höhenlagen Temperaturmessfühler 36, 38, 40a und 41a vorliegen. Das Messband liegt zwischen der Wandung des Behälters 1 und einer Wärmedämmschalung 45a.

Die Messleitungen der Temperaturfühler sind in der Leitung 42a zusammengefasst, die mit einer Steuereinrichtung z.B. einem Mikroprozessor 43a, verbunden ist. Dieser kann über eine Leitung 44a von einer weiterer Messstelle 46a auch die Temperaturwerte des zugespeisten Wassers aufnehmen. Die Steuereinrichtung 43a dient vor allem zur Steuerung der volumetrischen Leistung des Zuspeisekreises, der die Stutzen 4 und 6 über eine Umwälzeinrichtung 12 miteinander verbindet. Über eine Leitung 47a steuert die Steuereinrichtung 43a die Drehzahl der Umwälzeinrichtung 12. In dem Speisekreis liegen ein oder zwei Wärmetauscher 8 die mit einem Sonnenkollektorkreis 9 oder einem üblichen Heizkreis 10 verbunden sind.

Bei Inbetriebnahme arbeitet die Einrichtung in einer Schnellaufheizphase. Dabei kann der Wärmeerzeuger momentan aufgrund der höheren Einspeisetemperaturen mit einem geringeren Wirkungsgrad arbeiten. Die Dauer der Schnellaufheizphase wird bestimmt durch die Dauer des Aufheizens eines vorbestimmten oberen Volumenbereiches des Speicherbehälters 1 auf eine vorbestimmte Temperatur.

Die Grösse dieses Volumens kann frei gewählt werden. Ebenso kann die Soll-Temperatur der Aufheizung frei eingestellt werden. Sobald die Soll-Temperatur erreicht ist, schaltet der_Mikroprozessor 43a auf Normalbetrieb um.

Hierbei arbeitet der Sonnenkollektor mit dem optimalen Wirkungsgrad. Dabei kann die Temperatur an der Messstelle 46a absinken.

In der Schnellaufheizphase gelangt das Warmwasser durch den Zuführungsstutzen 6 in die Verweilzone 48 (Fig. 6). Wegen des grossen Temperaturunterschiedes zu dem Wasser, das im Speicher vorhanden ist, steigt das Wasser entsprechend den gestrichelten Pfeilen in Fig. 5 durch die Aufströmzone 46 und die Durchtrittsöffnungen 22 in den oberen Volumenbereich 30 des Behälters 1 auf und füllt diesen mit Wasser hoher Temperatur.

Zeigen die Temperaturfühler eine ausreichende Aufheizung des oberen Volumenbereiches an, schaltet der Mikroprozessor 43a auf Normalbetrieb. Dabei ist häufig die Temperatur des zugeführten Wassers deutlich niedriger als die Höchsttemperatur. Durch das negative Temperaturgefälle gegenüber dem Wasser im Volumenbereich 30 wird nun das zugespeiste Wasser entsprechend den durchgezogenen Pfeilen in Fig. 5 in den unteren Volumenbereich 31 des Behälters 1 durch das untere Ende 52 des äusseren Leitrohrs 21 bzw. 47 eingespeist.

Diese selbsttätige Umschaltwirkung der Verteilereinrichtung 7 beruht wesentlich auf der Ausbildung und Bemessung der einzelnen Strömungszonen innerhalb der Verteilereinrichtung, wie dies weiter oben erläutert ist.

Die Leitrohre 20, 21 bzw. 45, 47 bestehen zweckmässigerweise aus einem Material geringerer Wärmeleitfähigkeit oder sind mit einem solchen Material ummantelt. Die Rohre selbst ebenso wie die ringförmige Aufströmkammer zwischen den Rohren bildet eine wirksame Trennung zwischen-dem Austritt im Bereich der Durchtrittsöffnungen 22 und dem Austritt am unteren Ende 52 des äusseren Leitrohres 21 bzw. 47. Damit wird sowohl während der Aufheizung als auch während der Abkühlung die Schichtung nicht nur in optimaler Weise rasch und zuverlässig ausgebildet, sondern auch über lange Zeiten aufrechterhalten, auch wenn die Zuführungstemperaturen und -mengen ebenso wie die Entnahme von heissem Wasser durch die Verbraucher und Wärmeerzeuger im erheblichen Umfange schwanken.

Durch den Wasserstutzen 4 kann der Speicherbehälter 1 gefüllt werden. Durch ihn wird aber auch kühleres Wasser entnommen, das über die Umwälzeinrichtung 12 durch die Wärmetauscher 8 geleitet, aufgeheizt und der Verteilereinrichtung 7 erneut zugeführt wird. Entsprechend den Temperaturwerten und der Temperaturverteilung im Speicherbehälter 1 und entsprechend der Wärmezufuhr durch den Wäremeerzeuger 9 wird die Drehzahl der Umwälzeinrichtung 12 und damit die Durchströmgeschwindigkeit von dem Mikroprozessor 43a gesteuert.

Da alle Anschlüsse in Decke und Boden vorgesehen sind, lässt sich in einfacher Weise die Wärmedämmschalung 45a anbringen.

Als nachteilhaft bei dem obigen bekannten Ansatz hat sich die Tatsache herausgestellt, dass es für jede Temperatur des zuströmenden Warmwassers einen optimalen Massenfluss bzw. eine optimale Strömungsgeschwindigkeit bei vorgegebener Lage und Geometrie des Aufströmkanals gibt. Da aber bestimmte Heizquellen in ihrer Ladeleistung begrenzt sind, kann diese optimale Strömungsgeschwindigkeit nicht immer erreicht werden. Mit anderen Worten ist dann die Lage und Geometrie des Aufströmkanals nicht mehr geeignet, da bei zu geringer Einströmgeschwindigkeit kühleres Wasser aus dem mittleren Speicherbereich in den oberen Speicherbereich gefördert wird und so die Effektivität sinkt. Mit anderen Worten ist dann der Volumenstrom zu gering, so dass ein nicht ausgefüllter Teilquerschnitt in der Aufströmzone eine Injektorwirkung zur Folge hat, die kälteres Wasser mit nach oben reisst.

Die DE 100 49 278 A1 offenbart eine Verteilereinrichtung für eine Warmwasser-Schichtspeichervorrichtung zum höhenmäßigen verteilen von zugeführtem Warmwasser in Innern eines Speicherbehälters. Diese bekannte Verteilereinrichtung weist eine Mehrzahl von Einströmrohren 2, 3, 4, 5, 6 (Zuführkanälen) auf, welche separat von einander von der Unterseite in den Speicherbehälter eingeführt sind, auf verschiedenen Ebenen in den Speicherbehälter münden und an ihren oberen Enden offen sind.

Die DE 197 52 813 A1 offenbart einen Warmwasser-Schichtspeicher mit gelochten Sinkrohren 7 als Zuführkanäle, welche mit der Oberseite des Speicherbehälters verbunden sind. Vorgeschaltet sind diesem gelochten Sinkrohren 7 Beruhigungsstücke 14, die nach dem Überlaufprinzip funktionieren.

Daher ist es Aufgabe der vorliegenden Erfindung, eine verbesserte Verteilereinrichtung für eine Warmwasser-Schichtspeichervorrichtung und eine entsprechende verbesserte Warmwasser-Schichtspeichervorrichtung zu schaffen, bei der die störenden Einflüssen unterschiedlicher Beladungsleistungen reduziert sind.

Der erfindungsgemässe Verteilereinrichtung für eine Warmwasser-Schichtspeichervorrichtung gemäss Anspruch 1 und die entsprechende Warmwasser-Schichtspeichervorrichtung gemäss Anspruch 18 weisen gegenüber dem bekannten Lösungsansatz den Vorteil auf, dass sie für einen breiteren Bereich von Ladeleistungen eine hohe Effektivität gewährleisten.

Die der vorliegenden Erfindung zugrundeliegende Idee besteht darin, dass eine Mehrzahl von Aufströmkanälen vorgesehen ist, die im wesentlichen parallel beabstandet von dem Zuführkanal angeordnet sind und an ihrem unteren Ende auf verschiedenen Ebenen in den Zuführkanal münden und an ihren oberen Enden offen sind.

In den Unteransprüchen finden sich vorteilhafte Weiterbildungen und Verbesserungen des jeweiligen Gegenstandes der Erfindung.

Gemäss einer bevorzugten Weiterbildung sind die Aufströmkanäle und der Zuführkanal in einem massiven Körper vorgesehen. Ein derartiger Körper kann einteilig oder mehrteilig aufgebaut sein.

Gemäss einer weiteren bevorzugten Weiterbildung ist der Körper zylindrisch gestaltet und der Zuführkanal entlang der Zylinderachse vorgesehen. Eine derartige Symmetrie ist aus strömungstechnischen und energetischen Gründen sehr vorteilhaft.

Gemäss einer weiteren bevorzugten Weiterbildung sind die Aufströmkanäle umfangsmässig verteilt und radial vom Zuführkanal beabstandet vorgesehen.

Gemäss einer weiteren bevorzugten Weiterbildung ist die Unterseite im Inneren des Körpers entsprechend der verschiedenen Ebenen höhen- und umfangsmässig gestuft, wobei die Aufströmkanäle nach unten offen sind und über eine vom Körpermantel umgebene nach unten offene Verweilzone in den Zuführkanal münden, wobei sich die Verweilzone zur Unterseite des Körpers hin über die unterste der Ebenen hinaus bis zu einer Austrittsebene des Zuführkanals fortsetzt.

Gemäss einer weiteren bevorzugten Weiterbildung ist der Körper rechteckig gestaltet, wobei der Zuführkanal und die Mehrzahl von Aufströmkanälen in einer Reihe angeordnet sind.

Gemäss einer weiteren bevorzugten Weiterbildung nimmt der Querschnitt der Aufströmkanäle mit zu tieferliegenden Ebenen hin zu.

Gemäss einer weiteren bevorzugten Weiterbildung mündet pro Ebene nur ein Aufströmkanal in den Zuführkanal.

Gemäss einer weiteren bevorzugten Weiterbildung münden pro Ebene mehrere Aufströmkanäle in den Zuführkanal.

Gemäss einer weiteren bevorzugten Weiterbildung münden die Aufströmkanale unter einem Winkel α mit 90° ≥ α ≥ 0° abfallend in den Zuführkanal.

Gemäss einer weiteren bevorzugten Weiterbildung sind der Zuführkanal in einem inneren Hohlkörper und die Aufströmkanäle in einem äusseren Hohlkörper vorgesehen, wobei die Aufströmkanäle durch Öffnungen im inneren Hohlkörper in den Zuführkanal münden.

Gemäss einer weiteren bevorzugten Weiterbildung sind der innere und äussere Hohlkörper Hohlzylinder.

Gemäss einer weiteren bevorzugten Weiterbildung ist zwischen dem inneren und äusseren Hohlkörper ein Isolationsmaterial vorgesehen, durch das die Aufströmkanäle gebildet werden.

Gemäss einer weiteren bevorzugten Weiterbildung sind die Aufströmkanäle in der äusseren Oberfläche des inneren Hohlkörpers gebildet.

Gemäss einer weiteren bevorzugten Weiterbildung sind die Aufströmkanäle und der innere Zuführkanal in einem Körper aus einem Material mit geringem Wärmedurchgangswert vorgesehen.

Gemäss einer weiteren bevorzugten Weiterbildung ist der Zuführkanal seitlich oberhalb der obersten Ebene mit dem Zuführungsstutzen für Warmwasser verbindbar.

Gemäss einer weiteren bevorzugten Weiterbildung ist am oberen Ende der Aufströmkanäle jeweils eine Rückflusssperrklappe vorgesehen.

Ausführungsbeispiele der Erfindung sind in den Zeichnungen dargestellt und in der nachfolgenden Beschreibung näher erläutert.

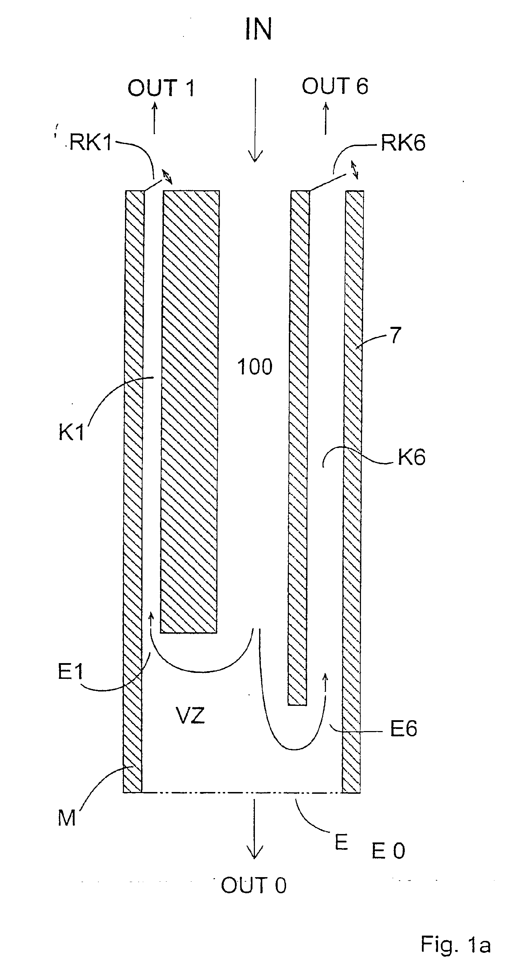

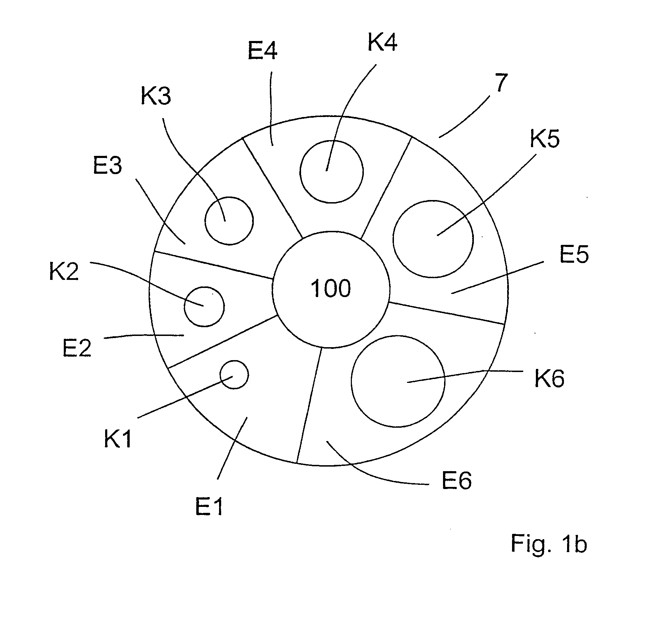

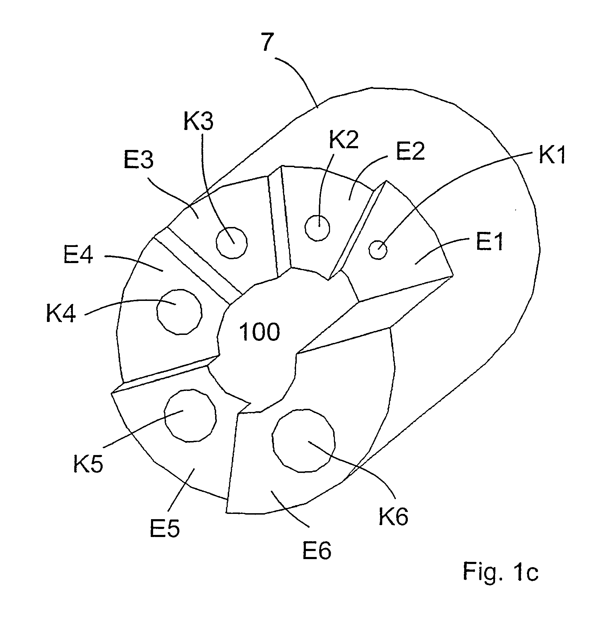

Es zeigen:
- Fig. a-c: eine schematische Schnittdarstellung einer Verteilereinrichtung für eine Warmwasser-Schicht-speichervorrichtung gemäss einer ersten Ausführungsform der vorliegenden Erfindung, und zwar Fig. 1a im Schnitt, Fig. 1b von unten und Fig. 1c aus einer aufgerissenen Perspektive;
- Fig. 2a,b: eine schematische Darstellung einer Verteilereinrichtung für eine Warmwasser-Schichtspeichervorrichtung gemäss einer zweiten Ausführungsform der vorliegenden Erfindung, und zwar Fig. 2a im Schnitt und Fig. 2b von oben;
- Fig. 3a,b: eine schematische Darstellung einer Verteilereinrichtung für eine Warmwasser-Schichtspeichervorrichtung gemäss einer dritten Ausführungsform der vorliegenden Erfindung, und zwar Fig. 3a im Schnitt und Fig. 3b von oben;
- Fig. 4a,b: eine schematische Darstellung einer Verteilereinrichtung für eine Warmwasser-Schichtspeichervorrichtung gemäss einer vierten Ausführungsform der vorliegenden Erfindung, und zwar Fig. 4a im Schnitt und Fig. 4b von oben;
- Fig. 5: eine schematische Darstellung einer aus der DE 38 35 096 44 C2 bekannten Warmwasser-Schichtspeichervorrichtung mit einer Verteilereinrichtung zum höhenmässigen Verteilen von zugeführtem Warmwasser im Innern des Speicherbehälters; und
- Fig. 6: eine vergrösserte schematische Schnittdarstellung der Verteilereinrichtung gemäss Fig. 5.

In den Figuren bezeichnen gleiche Bezugszeichen gleiche oder funktionsgleiche Bestandteile.

Fig. 1a-c zeigen eine schematische Darstellung einer Verteilereinrichtung für eine Warmwasser-Schichtspeichervorrichtung gemäss einer ersten Ausführungsform der vorliegenden Erfindung.

Bei der ersten Ausführungsform gemäss Figur 1a sind die äusseren Aufströmkanäle K1, K6 und der Zuführkanal 100 in einem massiven Körper aus einem Material mit geringem Wärmedurchgangswert vorgesehen. Der Körper besitzt im wesentlichen eine zylindrische Symmetrie, wobei der Zuführkanal 100 entlang der Längsachse des Zylinders ausgebildet ist und die äusseren Aufströmkanäle, von denen bei der gezeigten Schnittdarstellung nur K1 und K6 sichtbar sind, parallel zum Zuführkanal 100 und radial beabstandet davon vorliegen.

Die äusseren Aufströmkanäle K1, K6 beginnen auf verschiedenen Ebenen E1, E6 in einer ringsum von dem Körpermantel M umgebenen Verweilzone VZ, in der die eintretende Strömung IN abhängig von Temperatur und Strömungsgeschwindigkeit in die Aufströmkanäle K1, K6 auf den verschiedenen Ebenen E1, E6 einbiegt. Dabei vergrössert sich der Strömngsquerschnitt mit zunehmender Tiefe der Ebenen E1, E6.

Bei negativer Temperaturdifferenz in Bezug auf die Temperaturen im oberen Bereich 30 (siehe Fig. 5) verlässt die eintretende Strömung IN den Körper in der Ebene EO am Ende des Körpers als austretende Strömung OUT0. Hingegen verlässt sie bei positiver Temperaturdifferenz den Körper als austretende Strömung OUT1 bzw. OUT6 am oberen Ende der Aufströmkanäle K1 bzw. K6, und zwar abhängig von der Ladeleistung. Zusätzlich können, wie gezeigt, am oberen Ende der Aufströmkanäle K1, K6 jeweilige Rückflusssperrklappen RK1, RK6 vorgesehen werden, beispielsweise in Form von dünnen Silikonmembranen, die einseitig am Körper angelängt sind, welche einen Rückfluss von warmen Wasser in die Aufströmkanäle vermeiden, falls die Strömung IN eine geringe Temperatur aufweist und also austretende Strömung umgekehrt ist.

In der gewählten Darstellung von Fig. 1b,c ist deutlich erkennbar, dass die äusseren Aufströmkanäle K1 bis K6, welche auf verschiedenen Ebenen E1 bis E6 enden, umfangsmässig verteilt und radial vom Zuführkanal beabstandet im zylindrischen Körper vorgesehen sind. Die Anordnung entspricht im wesentlichen derjenigen einer Wendeltreppe, wie Fig. 1c zeigt, bei der Körpermantel M weggelassen ist. Die Strömungsquerschnitte der Kanäle K1 bis K6 nehmen mit tieferer Lage der jeweiligen Mündungsebene E1 bis E6 zu.

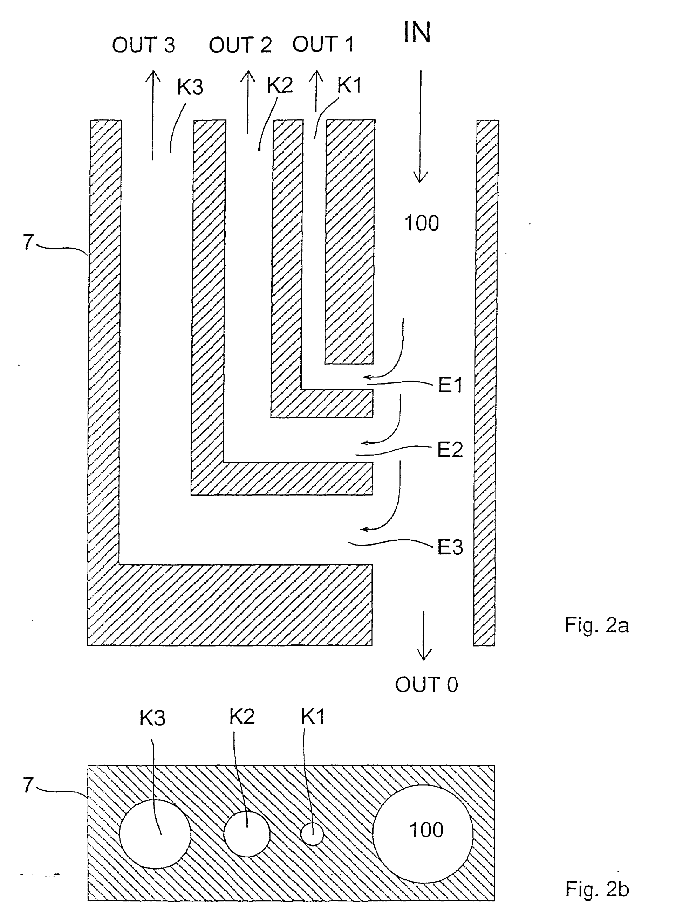

Fig. 2a,b zeigen eine schematische Darstellung einer Verteilereinrichtung für eine Warmwasser-Schichtspeichervorrichtung gemäss einer zweiten Ausführungsform der vorliegenden Erfindung.

Die in Fig. 2a, b gezeigte zweite Ausführungsform weist als Verteilereinrichtung 7 ebenfalls einen massiven Körper aus einem Material mit einem geringen Wärmedurchgangswert auf, der jedoch in diesem nicht zylindrisch, sondern rechteckig gestaltet ist. Der Zuführkanal 100 ist entlang der Längsrichtung vorgesehen und weist nach oben und nach unten hin eine Eintrittsöffnung für die eintretende Strömung IN bzw. eine Austrittsöffnung für die austretende Strömung OUTO auf. Vom Zuführkanal 100 zeigen auf unterschiedlichen Ebenen E1, E2, E3 äussere Aufströmkanäle K1, K2, K3 mit nach unten zunehmenden Strömungsquerschnitt ab, welche wiederum bei bestimmter Temperatur abhängig von der Strömungsgeschwindigkeit die austretende Strömung OUT1, OUT2, OUT3 an die Oberseite der Verteilereinrichtung leiten.

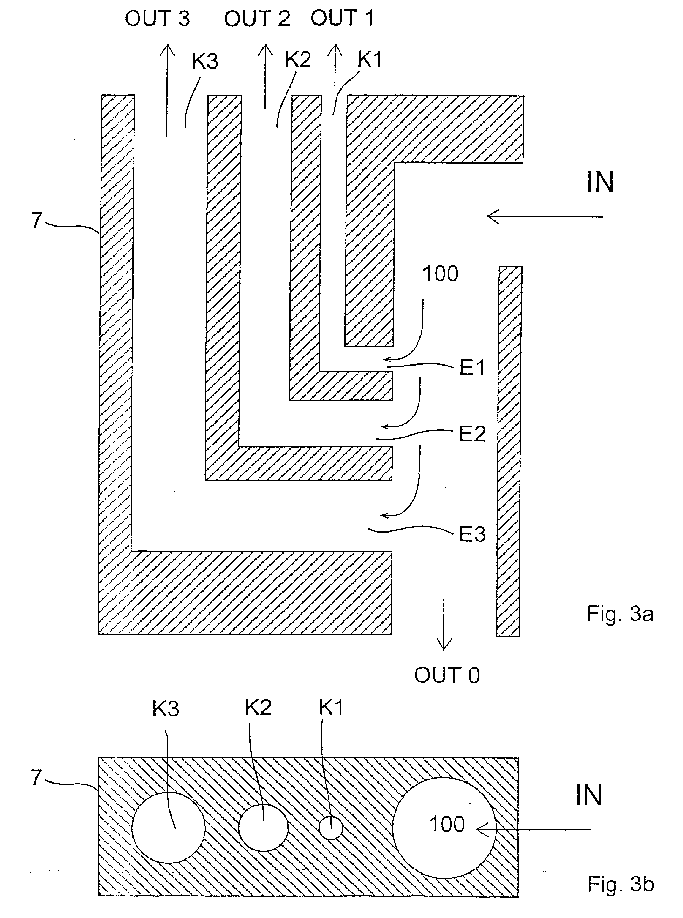

Fig. 3a,b zeigen eine schematische Darstellung einer Verteilereinrichtung für eine Warmwasser-Schichtspeichervorrichtung gemäss einer dritten Ausführungsform der vorliegenden Erfindung.

Bei der dritten Ausführungsform gemäss Figur 3a,b mündet der Zuführkanal 100 nicht an der Oberseite des rechteckigen massiven Körpers, sondern seitlich davon oberhalb der obersten Ebene E1, an der der Aufströmkanal K1 abzweigt. Eine derartige Gestaltung ist dann zweckmässig, wenn eine entsprechende Zuleitung von einem Zuführungsstutzen des Speicherbehälters nicht von der Oberseite des Speicherbehälters an die Verteilereinrichtung 7 herangeführt wird, sondern von unten oder von der Seite her.

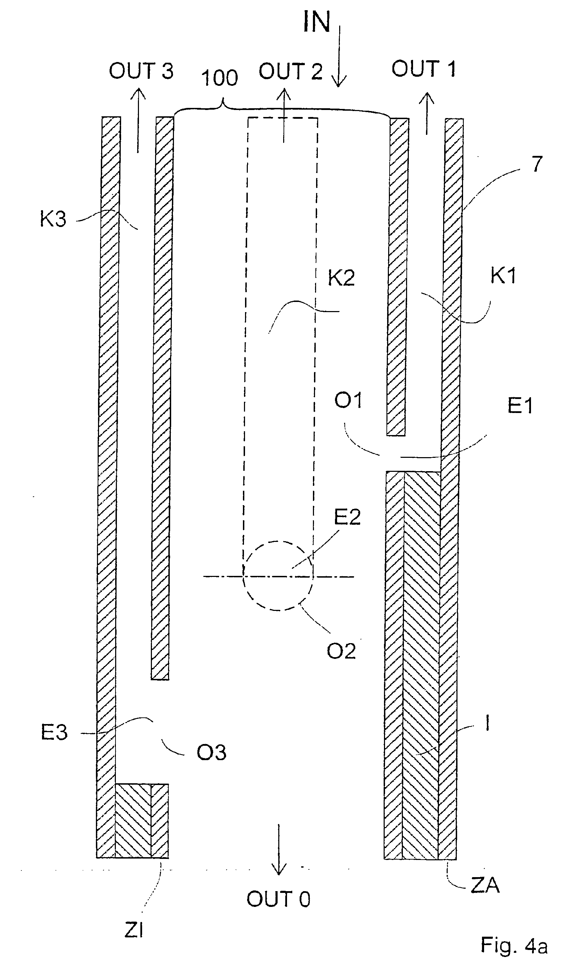

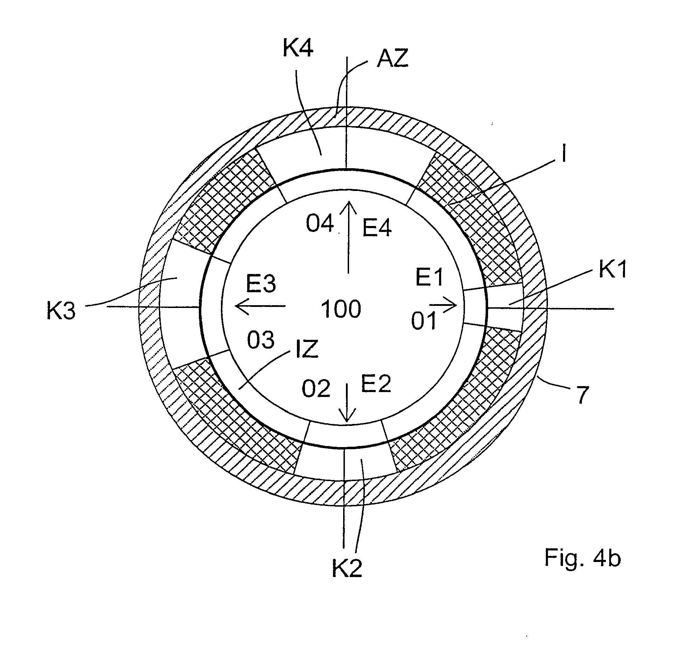

Fig. 4a,b zeigen eine schematische Darstellung einer Verteilereinrichtung für eine Warmwasser-Schichtspeichervorrichtung gemäss einer vierten Ausführungsform der vorliegenden Erfindung.

Bei der vierten Ausführungsform gemäss Fig. 4a,b besteht die Verteilereinrichtung 7 nicht aus einem einzigen massiven Körper, sondern aus zwei ineinander gesetzten Hohlkörpern, nämlich einem inneren Hohlzylinder ZI und einem äusseren Hohlzylinder ZA. In der Wand des inneren Hohlzylinders sind Durchtrittsöffnungen O1 bis 04 vorgesehen, welche in den Zwischenraum zwischen dem äusseren Hohlzylinder ZA und dem inneren Hohlzylinder ZI führen. In diesem Zwischenraum sind die äusseren Aufströmkanäle K1 bis K4 gebildet und durch ein Isolationsmaterial I voneinander getrennt.

Auch bei diesem Beispiel nehmen die Strömungsquerschnitte der Aufströmkanäle K1 bis K4 mit zunehmender Tiefe der Mündungsebene E1 bis E4 zu.

Zu dieser Ausführungsform sei bemerkt, dass es ebenfalls möglich wäre, den inneren Hohlzylinder ZI dickwandiger zu gestalten als den äusseren Hohlzylinder und die äusseren Aufströmkanäle in die Aussenwandung des inneren Hohlzylinders zu integrieren, beispielsweise einzufräsen.

Diese Ausführungsform zeichnet sich insbesondere durch ihre leichte Herstellbarkeit aus.

## Patentansprüche

1. Verteilereinrichtung (7) für eine Warmwasser-Schichtspeichervorrichtung zum höhenmässigen Verteilen von zugeführtem Warmwasser im Innern eines Speicherbehälters (1; 40), welche
einen inneren senkrechten Zuführkanal (100), der an seiner Oberseite mit einem Zuführungsstutzen (6; 44) für Warmwasser verbindbar ist und der an seiner Unterseite offen ist aufweist ; **dadurch gekennzeichnet, dass** die Verteilereinrichtung (7) weiterhin
eine Mehrzahl von senkrecht angeordneten Aufströmkanälen (K1-K6), die im wesentlichen parallel und radial beabstandet von dem Zuführkanal (100) angeordnet sind und an ihrem unteren Ende auf verschiedenen Ebenen (E1-E6) in den Zuführkanal (100) münden und an ihren oberen Enden, offen sind, aufweist.

2. Verteilereinrichtung (7) nach Anspruch 1, **dadurch gekennzeichnet, dass** die Aufströmkanäle (K1-K6) und der Zuführkanal (100) in einem massiven Körper vorgesehen sind.

3. Verteilereinrichtung (7) nach Anspruch 2, **dadurch gekennzeichnet, dass** der Körper zylindrisch gestaltet ist und der Zuführkanal (100) entlang der Zylinderachse vorgesehen ist.

4. Verteilereinrichtung (7) nach Anspruch 3, **dadurch gekennzeichnet, dass** die Aufströmkanäle (K1-K6) umfangsmässig verteilt und radial vom Zuführkanal (100) beabstandet vorgesehen sind.

5. Verteilereinrichtung (7) nach Anspruch 4, **dadurch gekennzeichnet, dass** die Unterseite im Innern des Körpers entsprechend der verschiedenen Ebenen (E1-E6) höhen- und umfangsmässig gestuft ist, die Aufströmkanäle (K1-K6) nach unten offen sind und über eine vom Körpermantel (M) umgebene nach unten offene Verweilzone (VZ) in den Zuführkanal (100) münden, und die Verweilzone (VZ) sich zur Unterseite des Körpers hin über die unterste der Ebenen (E6) hinaus bis zu einer Austrittsebene (E0) des Zuführkanals (100) fortsetzt.

6. Verteilereinrichtung (7) nach Anspruch 2, **dadurch gekennzeichnet, dass** der Körper rechteckig gestaltet ist und der Zuführkanal (100) und die Mehrzahl von Aufströmkanälen (K1-K6) in einer Reihe angeordnet sind.

7. Verteilereinrichtung (7) nach einem der vorhergehenden Ansprüche, **dadurch gekennzeichnet, dass** der Querschnitt der Aufströmkanäle (K1-K6) mit zu tieferliegenden Ebenen (E1-E6) hin zunimmt.

8. Verteilereinrichtung (7) nach einem der vorhergehenden Ansprüche, **dadurch gekennzeichnet, dass** pro Ebene (E1-E6) nur ein Aufströmkanal (K1-K6) in den Zuführkanal (100) mündet.

9. Verteilereinrichtung (7) nach einem der vorhergehenden Ansprüche 1 bis 8, **dadurch gekennzeichnet, dass** pro Ebene (E1-E6) mehrere Aufströmkanäle (K1-K6) in den Zuführkanal (100) münden.

10. Verteilereinrichtung (7) nach einem der vorhergehenden Ansprüche, **dadurch gekennzeichnet, dass** die Aufströmkanale (K1-K6) unter einem Winkel α mit 90° ≥ α ≥ 0° abfallend in den Zuführkanal (100) münden.

11. Verteilereinrichtung (7) nach Anspruch 1, **dadurch gekennzeichnet, dass** der Zuführkanal (100) in einem inneren Hohlkörper (ZI) und die Aufströmkanäle (K1-K6) in einem äusseren Hohlkörper (ZA) vorgesehen sind und die Aufströmkanäle (K1-K6) durch Öffnungen (O1-O3) im inneren Hohlkörper (ZI) in den Zuführkanal (100) münden.

12. Verteilereinrichtung (7) nach Anspruch 11, **dadurch gekennzeichnet, dass** der innere und äussere Hohlkörper (ZI; ZA) Hohlzylinder sind.

13. Verteilereinrichtung (7) nach Anspruch 10, 11 oder 12, **dadurch gekennzeichnet, dass** zwischen dem inneren und äusseren Hohlkörper (ZI; ZA) ein Isolationsmaterial (I) vorgesehen ist, durch das die Aufströmkanäle (K1-K6) gebildet werden.

14. Verteilereinrichtung (7) nach Anspruch 10, 11 oder 12, **dadurch gekennzeichnet, dass** die Aufströmkanäle (K1-K6) in der äusseren Oberfläche des inneren Hohlkörpers (ZI) gebildet sind.

15. Verteilereinrichtung (7) nach einem der Ansprüche 1 bis 14, **dadurch gekennzeichnet, dass** die Aufströmkanäle (K1-K6) und der innere Zuführkanal (100) in einem Körper aus einem Material mit geringem Wärmedurchgangswert vorgesehen sind.

16. Verteilereinrichtung (7) nach einem der vorhergehenden Ansprüche, **dadurch gekennzeichnet, dass** der Zuführkanal (100) seitlich oberhalb der obersten Ebene (E1) mit dem Zuführungsstutzen (6; 44) für Warmwasser verbindbar ist.

17. Verteilereinrichtung (7) nach einem der vorhergehenden Ansprüche, **dadurch gekennzeichnet, dass** am oberen Ende der Aufströmkanäle (K1-K6) jeweils eine Rückflusssperrklappe (RK1, Rk6) vorgesehen ist.

18. Warmwasser-Schichtspeichervorrichtung mit:
einem Speicherbehälter (1; 40), der einen Zuführungsstutzen (6; 44) zum Zuführen von Warmwasser aufweist; und
einer im oberen Höhenbereich des Speicherbehälters (1; 40) angeordneten Verteilereinrichtung (7) zum höhenmässigen Verteilen von zugeführtem Warmwasser im Innern des Speicherbehälters (1; 40) nach mindestens einem der vorhergehenden Ansprüche;
wobei der Zuführkanal (100) oberhalb der obersten Ebene (E1) mit dem Zuführungsstutzen (6; 44) verbundenen ist und seine Unterseite im mittleren Höhenbereich des Speicherbehälters (1; 40) angeordnet ist; und
wobei die Aufströmkanäle (K1-K6) an ihren oberen Enden in den oberen Höhenbereich des Speicherbehälters (1; 40) münden.

19. Warmwasser-Schichtspeichervorrichtung nach Anspruch 18, **dadurch gekennzeichnet, dass** der Speicherbehälter (1; 40) aufrechtstellbar ist und der Zuführungsstutzen (6; 44) zum Zuführen von Warmwasser an seiner Oberseite, Unterseite oder Seite angeordnet ist und ein Entnahmestutzen (4) zum Entnehmen von Kaltwasser an seiner Unterseite angeordnet ist.

20. Warmwasser-Schichtspeichervorrichtung nach Anspruch 18, **dadurch gekennzeichnet, dass** der Speicherbehälter (1; 40) aufrechtstellbar ist und der Zuführungsstutzen (6; 44) gleichzeitig zum Entnehmen von Warmwasser dient und der Entnahmestutzen (4) gleichzeitig zum Zuführen von Kaltwasser dient, so dass über die Verteilereinrichtung (7) auch Wasser aus dem unteren Bereich (31) des Speicherbehälters (1) entnehmbar ist.

## Claims

1. Distributor device (7) for a stratified hot-water storage apparatus for distributing supplied hot water in the interior of a storage container (1; 40) at different levels, which distributor device comprises:
an inner, perpendicular supply channel (100) whose upper side can be connected to a supply connection piece (6; 44) for hot water and whose lower side is open; **characterized in that** the distributor device (7) also has a multiplicity of perpendicular upward-flow channels (K1-K6) which are arranged substantially parallel and radially at a distance from the supply channel (100) and issue into the supply channel (100) in different planes (E1-E6) at their lower end and are open at their upper ends.

2. Distributor device (7) according to Claim 1, **characterized in that** the upward-flow channels (K1-K6) and the supply channel (100) are provided in a solid body.

3. Distributor device (7) according to Claim 2, **characterized in that** the body is of cylindrical design and the supply channel (100) is provided along the cylinder axis.

4. Distributor device (7) according to Claim 3, **characterized in that** the upward-flow channels (K1-K6) are provided such that they are distributed over the circumference and are radially at a distance from the supply channel (100).

5. Distributor device (7) according to Claim 4, **characterized in that** the height and circumference of the lower side are stepped in the interior of the body in accordance with the various planes (E1-E6), the upward-flow channels (K1-K6) are open at the bottom and issue into the supply channel (100) via a dwell zone (VZ) which is surrounded by the body casing (M) and is open at the bottom, and the dwell zone (VZ) continues in the direction of the lower side of the body, beyond the lowermost plane (E6), as far as the outlet plane (E0) of the supply channel (100).

6. Distributor device (7) according to Claim 2, **characterized in that** the body is of rectangular design and the supply channel (100) and the plurality of upward-flow channels (K1-K6) are arranged in a row.

7. Distributor device (7) according to one of the preceding claims, **characterized in that** the cross section of the upward-flow channels (K1-K6) increases as planes (E1-E6) become deeper.

8. Distributor device (7) according to one of the preceding claims, **characterized in that** only one upward-flow channel (K1-K6) issues into the supply channel (100) for each plane (E1-E6).

9. Distributor device (7) according to one of the preceding Claims 1 to 8, **characterized in that** a plurality of upward-flow channels (K1-K6) issue into the supply channel (100) for each plane (E1-E6).

10. Distributor device (7) according to one of the preceding claims, **characterized in that** the upward-flow channels (K1-K6) issue into the supply channel (100) in a descending manner at an angle α, where 90° ≥ α ≥ 0°.

11. Distributor device (7) according to Claim 1, **characterized in that** the supply channel (100) is provided in an inner hollow body (ZI) and the upward-flow channels (K1-K6) are provided in an outer hollow body (ZA), and the upward-flow channels (K1-K6) issue into the supply channel (100) through openings (O1-O3) in the inner hollow body (Z1).

12. Distributor device (7) according to Claim 11, **characterized in that** the inner and outer hollow bodies (ZI; ZA) are hollow cylinders.

13. Distributor device (7) according to Claim 10, 11 or 12, **characterized in that** an insulating material (I), through which the upward-flow channels (K1-K6) are formed, is provided between the inner and outer hollow bodies (ZI; ZA).

14. Distributor device (7) according to Claim 10, 11 or 12, **characterized in that** the upward-flow channels (K1-K6) are formed in the outer surface of the inner hollow body (ZI).

15. Distributor device (7) according to one of Claims 1 to 14, **characterized in that** the upward-flow channels (K1-K6) and the inner supply channel (100) are provided in a body composed of a material with a low heat-transfer coefficient.

16. Distributor device (7) according to one of the preceding claims, **characterized in that** the supply channel (100) can be connected to the supply connection piece (6; 44) for hot water laterally above the uppermost plane (E1).

17. Distributor device (7) according to one of the preceding claims, **characterized in that** a non-return flap (RK1, RK6) is provided at the upper end of each upward-flow channel (K1-K6).

18. Stratified hot-water storage apparatus comprising:
a storage container (1; 40) which has a supply connection piece (6; 44) for supplying hot water; and
a distributor device (7) which is arranged in the upper vertical region of the storage container (1; 40) for distributing supplied hot water in the interior of the storage container (1; 40) at different levels according to at least one of the preceding claims;
with the supply channel (100) being connected to the supply connection piece (6; 44) above the uppermost plane (E1) and its lower side being arranged in the central vertical region of the storage container (1, 40); and
with the upward-flow channels (K1-K6) issuing into the upper vertical region of the storage container (1; 40) at their upper ends.

19. Stratified hot-water storage apparatus according to Claim 18, **characterized in that** the storage container (1; 40) can be placed in an upright position and the supply connection piece (6; 44) for supplying hot water is arranged on its upper side, lower side or side and an extraction connection piece (4) for extracting cold water is arranged on its lower side.

20. Stratified hot-water storage apparatus according to Claim 18, **characterized in that** the storage container (1; 40) can be placed in an upright position and the supply connection piece (6; 44) simultaneously serves to extract hot water and the extraction connection piece (4) simultaneously serves to supply cold water, with the result that water can also be extracted from the lower region (31) of the storage container (1) via the distributor device (7).

## Revendications

1. Dispositif de distribution (7) pour un dispositif de stockage d'eau chaude à couches pour la distribution, selon la hauteur, d'eau chaude envoyée à l'intérieur d'un réservoir de stockage (1 ; 40), lequel comprend un canal d'alimentation (100) intérieur vertical, pouvant être relié du côté supérieur avec un embout d'alimentation (6 ; 44) pour l'eau chaude et qui est ouvert du côté inférieur ;
**caractérisé en ce que**
le dispositif de distribution (7) comprend, de plus, plusieurs canaux d'écoulement vers le haut (K1 - K6) verticaux qui sont disposés à distance du canal d'alimentation (100) de façon essentiellement parallèle et radiale et aboutissent au niveau de leur extrémité inférieure dans le canal d'alimentation (100) sur différents niveaux (E1-E6) et sont ouverts au niveau de leurs extrémités supérieures.

2. Dispositif de distribution (7) selon la revendication 1, **caractérisé en ce que** les canaux d'écoulement (K1-K6) et le canal d'alimentation (100) sont prévus dans un corps massif.

3. Dispositif de distribution (7) selon la revendication 2, **caractérisé en ce que** le corps est de forme cylindrique et que le canal d'alimentation (100) est prévu le long de l'axe cylindrique.

4. Dispositif de distribution (7) selon la revendication 3, **caractérisé en ce que** les canaux d'écoulement (K1-K6) sont distribués sur la circonférence et sont disposés à distance du canal d'alimentation (100) de façon radiale.

5. Dispositif de distribution (7) selon la revendication 4, **caractérisé en ce que** la partie inférieure à l'intérieur du corps est étagée en hauteur et sur la circonférence et correspond aux différents niveaux (E1-E6), et que les canaux d'écoulement (K1-K6) sont ouverts vers le bas et aboutissent dans le canal d'alimentation (100) via une zone de séjour (VZ) ouverte vers le bas et entourée par l'enveloppe du corps (M) et que la zone de séjour (VZ) s'étend vers le côté inférieur du corps, au delà du niveau le plus bas (E6) jusqu'à un niveau de sortie (EO) du canal d'alimentation (100).

6. Dispositif de distribution (7) selon la revendication 2, **caractérisé en ce que** le corps est réalisé sous la forme d'un rectangle et que le canal d'alimentation (100) et les multiples canaux d'écoulement (K1-K6) sont disposés en rangée.

7. Dispositif de distribution (7) selon l'une quelconque des revendications précédentes, **caractérisé en ce que** la section transversale des canaux d'écoulement (K1-K6) augmente en direction des niveaux situés plus bas (E1-E6).

8. Dispositif de distribution (7) selon l'une quelconque des revendications précédentes, **caractérisé en ce que** seul un canal d'écoulement (K1-K6) par niveau (E1-E6) débouche dans le canal d'alimentation (100).

9. Dispositif de distribution (7) selon l'une des revendications 1 à 8 précédentes, **caractérisé en ce que** plusieurs canaux d'écoulement (K1-K6) par niveau (E1-E6) débouchent dans le canal d'alimentation (100).

10. Dispositif de distribution (7) selon l'une quelconque des revendications précédentes, **caractérisé en ce que** les canaux d'écoulement (K1-K6) aboutissent dans le canal d'alimentation (100) selon un angle α avec 90° ≥ α ≥ 0.

11. Dispositif de distribution (7) selon la revendication 1, **caractérisé en ce que** le canal d'alimentation (100) est prévu dans un corps creux intérieur (ZI) et les canaux d'écoulement (K1-K6) sont prévus dans un corps creux extérieur (ZA) et que les canaux d'écoulement (K1-K6) aboutissent dans le canal d'alimentation (100) par des ouvertures (O1-O3) dans le corps creux intérieur (ZI).

12. Dispositif de distribution (7) selon la revendication 11, **caractérisé en ce que** les corps creux intérieur et extérieur (ZI ; ZA) sont des cylindres creux.

13. Dispositif de distribution (7) selon la revendication 10, 11 ou 12, **caractérisé en ce qu'**un matériau d'isolation (I), à travers lequel les canaux d'écoulement (K1-K6) sont formés, est prévu entre le corps creux intérieur et le corps creux extérieur (ZI ; ZA).

14. Dispositif de distribution (7) selon la revendication 10, 11 ou 12, **caractérisé en ce que** les canaux d'écoulement (K1-K6) sont formés dans la surface extérieure du corps creux intérieur (ZI).

15. Dispositif de distribution (7) selon une des revendications 1 à 14, **caractérisé en ce que** les canaux d'écoulement (K1-K6) et le canal d'alimentation intérieur (100) sont prévus dans un corps avec un matériau ayant un faible coefficient de transmission de chaleur.

16. Dispositif de distribution (7) selon l'une quelconque des revendications précédentes, **caractérisé en ce que** le canal d'alimentation (100) peut être relié latéralement, au-dessus du niveau le plus élevé (E1), avec l'embout d'alimentation (6 ; 44) pour l'eau chaude.

17. Dispositif de distribution (7) selon l'une quelconque des revendications précédentes, **caractérisé en ce qu'**à l'extrémité supérieure des canaux d'écoulement (K1-K6), on prévoit à chaque fois un volet d'arrêt de reflux (RK1, RK6).

18. Dispositif de stockage d'eau chaude à couches comprenant :
un réservoir de stockage (1 ;40) qui comprenant un embout d'alimentation (6 ; 44) pour l'alimentation en eau chaude ; et
un dispositif de distribution (7) disposé dans la zone supérieure du réservoir de stockage (1 ; 40) pour la distribution selon la hauteur d'eau chaude envoyée à l'intérieur du réservoir de stockage (1 ; 40) selon au moins une des revendications précédentes ;
le canal d'alimentation (100) étant relié, au-dessus du niveau le plus élevé (E1), avec l'embout d'alimentation (6 ; 44) et son côté inférieur étant disposé dans la zone médiane du réservoir de stockage (1 ; 40) ; et
les canaux d'écoulement (K1-K6) aboutissant au niveau de leurs extrémités supérieures dans la zone supérieure du réservoir de stockage (1 ; 40).

19. Dispositif de stockage d'eau chaude à couches selon la revendication 18, **caractérisé en ce que** le réservoir de stockage (1 ; 40) peut être mis debout et que l'embout d'alimentation (6 ; 44) pour l'alimentation en eau chaude est disposé au niveau de son côté supérieur, son côté inférieur ou latéralement et un embout de prélèvement (4) pour le retrait d'eau froide est disposé au niveau de son côté inférieur.

20. Dispositif de stockage d'eau chaude à couches selon la revendication 18, **caractérisé en ce que** le réservoir (1 ; 40) peut être mis debout et que l'embout d'alimentation (6 ; 44) sert en même temps pour retirer l'eau chaude et l'embout de prélèvement (4) sert en même temps pour l'alimentation en eau froide de telle façon que l'eau issue de la zone inférieure (31) du réservoir de stockage (1) puisse aussi être retirée via le dispositif de distribution (7).
